# EUROPEAN PATENT APPLICATION

(11) **EP 2 267 673 A2**
(43) Date of publication of application: **29.12.2010**
(21) Application number: 09171652.2
(22) Date of filing: 29.09.2009
(51) Int. Cl.: G08B 13/196, H04N 7/18

(54) **Digital video recording system and self-test method thereof**

(30) Priority: 25.06.2009 CN 200910303663
(71) Applicant: Hon Hai Precision Industry Co., Ltd., Tu-cheng City, Taipei Hsien (TW)
(72) Inventor: Sun, Yu-Hung, Tu-cheng City Taipei Hsien (TW)
(74) Representative: Craven, Ian

(57) **Abstract**

A digital video recording system includes a number of cameras, a video decoder, a video multiplexer, a video stream compressor, a processor, a storage system, a video stream de-compressor, a video encoder, and a number of switch units. The video decoder, the video multiplexer, the video stream compressor, the processor, and the storage system are connected in series. The processor is also connected to the video stream de-compressor and the video encoder in series. Each switch connects one of the number of cameras to the input of the video decoder or connects the output of the video encoder to the input of the video decoder selectively.

## Description

The present disclosure relates to a digital video recording system and a detecting method of the digital video recording system.

Digital video recording systems have been used in many fields, such as traffic control, security. Users need to assure that the digital video recording systems work properly to achieve the desired goals. However, in order to have a working recording system, users generally check the recording system with a complicated process, or hire professionals to check whether the digital video recording systems is working, which is inconvenient.

### BRIEF DESCRIPTION OF THE DRAWINGS

FIG. 1 is a schematic block diagram of an exemplary embodiment of a digital video recording system.

FIG. 2 is a flowchart of an exemplary embodiment of a detecting method for the digital video recording system of FIG. 1.

### DETAILED DESCRIPTION

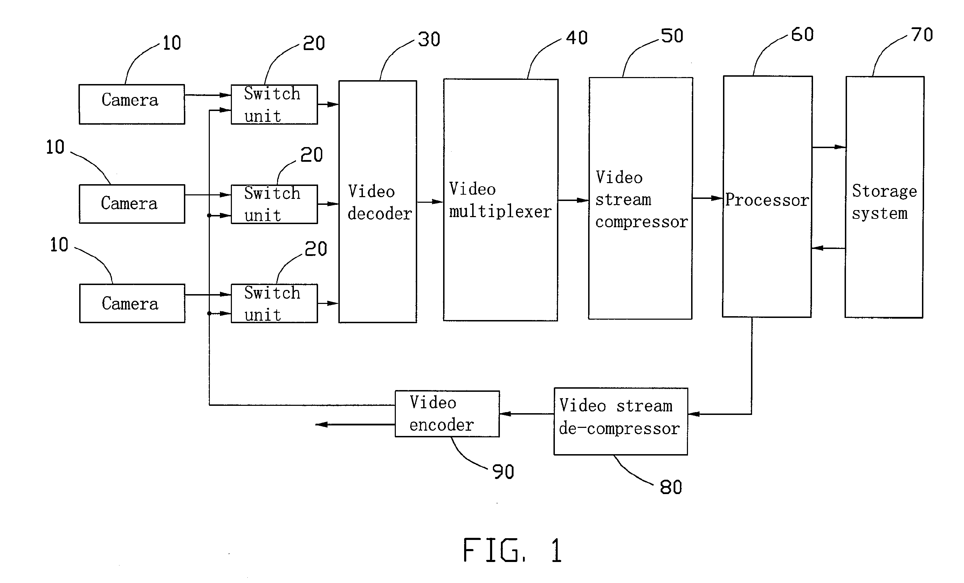

Referring to FIG. 1, an exemplary embodiment of a digital video recording system 1 includes a plurality of cameras 10, a plurality of switch units 20, a video decoder 30, a video multiplexer 40, a video stream compressor 50, a processor 60, a storage system 70, a video stream de-compressor 80, and a video encoder 90. The digital video recording system 1 is operable to record a video captured by the plurality of cameras 10.

Each of the plurality of the cameras 10 is connected to a first input of a corresponding one of the plurality of switch units 20. Outputs of the plurality of switch units 20 are connected to an input of the video decoder 30. An output of the video decoder 30 is connected to the storage system 70 via the video multiplexer 40, the video stream compressor 50, and the processor 60 in series. The storage system 70 is connected to an input of the video encoder 90 via the processor 60 and the video stream de-compressor 80 in series. An output of the video encoder 90 is connected to second inputs of the plurality of switch units 20.

In the embodiment, each switch unit 20 connects a corresponding camera 10 to the input of the video decoder 30 or connects the output of the video encoder 90 to the input of the video decoder 30, selectively. It can be understood that each switch unit 20 may be a logic switch.

Upon the condition that each switch unit 20 connects a corresponding camera 10 to the input of the video decoder 30 correspondingly, the digital video recording system 1 is at work.

The plurality of cameras 10 capture a plurality of images and transmit the plurality of images to the video decoder 30 via the plurality of switch units 20. The video decoder 30 processes the plurality of images to obtain a first video digital signal correspondingly, and transmits the first video digital signal to the video multiplexer 40. The video multiplexer 40 transmits the first video digital signal to the video stream compressor 50. The video stream compressor 50 compresses the first video digital signal to obtain first video compressed data correspondingly, and transmits the first video compressed data to the processor 60. The processor 60 stores the first video compressed data in the storage system 70.

It can be understood that the video decoder 30 processes the plurality of images with a known recognition technology. In addition, a known recognition technology, such as MPEG 4, is employed by the video stream compressor 50 to obtain the first video compressed data.

The processor 60 reads the first video compressed data stored in the storage system 70, and transmits the first video compressed data to the video stream de-compressor 80. The video stream de-compressor 80 decompresses the first video compressed data with a known recognition technology, such as MPEG 4, to obtain the first digital video signal. The first digital video signal is processed by the video encoder 90 to form a plurality of images. The plurality of images are transmitted to a monitor 100 to display.

Upon the condition that each switch unit 20 connects the output of the video encoder 90 to the input of the video decoder 30, the digital video recording system 1 is being detected.

In this condition, the storage system 70 stores second video compressed data and also first video de-compressed data corresponding to the second video compressed data in advance. The processor 60 reads the second video compressed data, and transmits the second video compressed data to the video de-compressor 80. The second video compressed data is processed by the video de-compressor 80, the video encoder 90, and the video decoder 30 in series to obtain second video de-compressed data. The video multiplexer 40 outputs the second video de-compressed data to the video compressor 50. The video compressor 50 bypasses the second video de-compressed data to the processor 60.

The processor 60 compares the second video de-compressed data with the first video de-compressed data which is pre-recorded in the storage system 70. Upon the condition that a difference between the second video de-compressed data and the first video de-compressed data is greater than a preset value, the processor 60 determines that the digital video recording system 1 is not working properly. Upon the condition that the difference between the second video de-compressed data and the first video de-compressed data is less than the preset value, the processor 60 determines that the digital video recording system 1 is working properly. It can be understood that the preset value corresponds to need. For example, when the digital video recording system 1 must work with a high precision, the preset value is relatively small. When the digital video recording system 1 works with a low precision, the preset value may be relatively big, correspondingly.

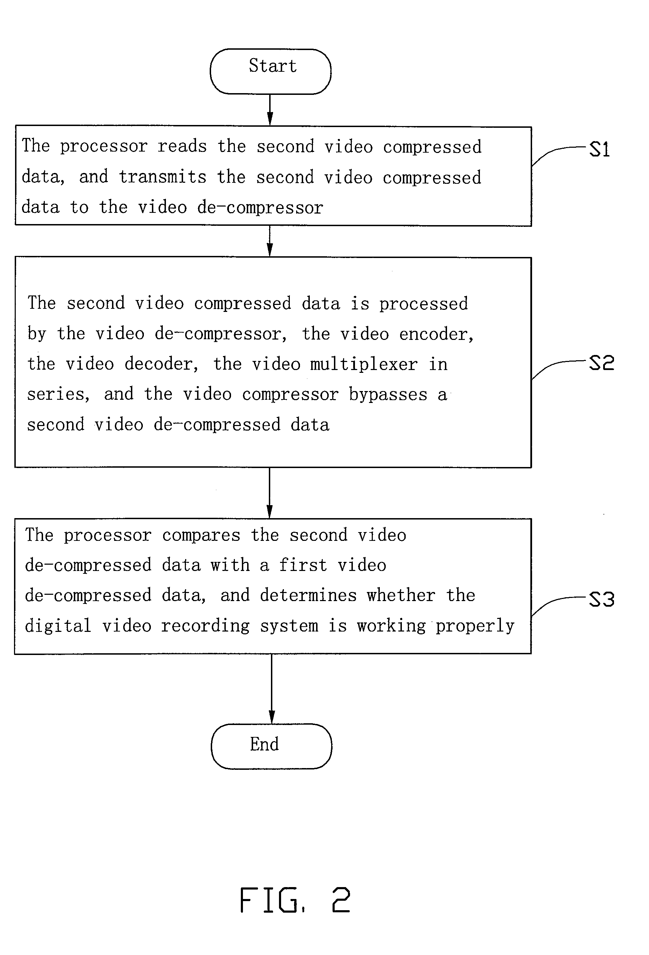

Referring to FIG. 2, an exemplary embodiment of a detecting method of the digital video recording system 1 of FIG. 1 includes the following steps.

In step S1, the processor 60 reads the second video compressed data, and transmits the second video compressed data to the video de-compressor 80. The second video compressed data and the first video de-compressed data corresponding to the second video compressed data are stored in the storage system 70 in advance. The second video compressed data and the first video de-compressed data may be standard video compressed data and standard video de-compressed data respectively used for detecting.

In step S2, the second video compressed data is processed by the video de-compressor 80, the video encoder 90, the video decoder 30, and the video multiplexer 40 in series to obtain the second video de-compressed data. As a result, the video compressor 50 bypasses the second video de-compressed data to processor 60.

In step S3, the processor 60 compares the second video de-compressed data with the first video de-compressed data stored in storage system 70. Upon the condition that a difference between the second video de-compressed data and the first video de-compressed data stored in storage system 70 is greater than a preset value, the processor 60 determines that the digital video recording system 1 is not working properly. Upon the condition that the difference between the second video de-compressed data and the first video de-compressed data stored in storage system 70 is less than the preset value, the processor 60 determines that the digital video recording system 1 is working properly.

The foregoing description of the exemplary embodiments of the disclosure has been presented only for the purposes of illustration and description and is not intended to be exhaustive or to limit the disclosure to the precise forms disclosed. Many modifications and variations are possible in light of the above everything. The embodiments were chosen and described in order to explain the principles of the disclosure and their practical application so as to enable others of ordinary skill in the art to utilize the disclosure and various embodiments and with various modifications as are suited to the particular use contemplated. Alternative embodiments will become apparent to those of ordinary skills in the art to which the present disclosure pertains without departing from its spirit and scope. Accordingly, the scope of the present disclosure is defined by the appended claims rather than the foregoing description and the exemplary embodiments described therein.

## Claims

1. A digital video recording system comprising:
a plurality of cameras;
a video decoder;
a video multiplexer;
a video stream compressor;
a processor;
a storage system connected to the processor, the video stream compressor, the video multiplexer, and an output of the video decoder in series;
a video stream de-compressor;
a video encoder, wherein an input of the video encoder is connected to the video stream de-compressor and the processor in series; and
a plurality of switch units, wherein a first input of each switch unit is connected to a corresponding one of the plurality of cameras, a second input of each switch unit is connected to an output of the video encoder, an output of each switch unit is connected to an input of the video decoder, and each switch unit connects the corresponding one of the plurality of cameras to the input of the video decoder or connects the output of the video encoder to the input of the video decoder, selectively.

2. The digital video recording system of claim 1, wherein each switch unit is a logic switch.

3. A detecting method for a digital video recording system, the detecting method comprising:
reading standard video compressed data by a processor, wherein a storage system stores the standard video compressed data and standard video de-compressed data;
transmitting the standard video compressed data to a video de-compressor;
processing the standard video compressed data by the video de-compressor, a video encoder, a video decoder, a video multiplexer in series to output video de-compressed data;
a video stream compressor bypasses the video de-compressed data to the processor;
and
comparing the video de-compressed data with the standard video de-compressed data, to determine whether the digital video recording system is working properly.

4. The detecting method of claim 3, wherein the comparing step comprises:
comparing the video de-compressed data with the standard video de-compressed data to obtain a difference;
comparing the difference with a preset value;
a determination being made that the digital video recording system is working properly, upon the condition that the difference is less than the preset value; and
a determination being made that the digital video recording system is not working properly, upon the condition that the difference is greater than the preset value.
